# EUROPÄISCHE PATENTSCHRIFT

(11) **EP 1 617 499 B1**
(45) Veröffentlichungstag und Bekanntmachung des Hinweises auf die Patenterteilung: **01.08.2007**
(21) Anmeldenummer: 05012388.4
(22) Anmeldetag: 09.06.2005
(51) Int. Cl.: H01M 8/02, H01M 8/04

(54) **Brennstoffzellensystem**
Fuel Cell System
Système de piles à combustible

(30) Priorität: 15.06.2004 DE 102004028809
(43) Veröffentlichungstag der Anmeldung: 18.01.2006
(73) Patentinhaber: Staxera GmbH, 01277 Dresden (DE)
(72) Erfinder: Lawrence, Jeremy, 17033 Neubrandenburg (DE)
(74) Vertreter: Schumacher & Willsau

(56) Entgegenhaltungen:
- EP-A- 1 271 684
- EP-A- 1 376 730
- US-A- 5 783 872
- US-A1- 2002 168 560
- US-A1- 2003 027 021
- HOLLADAY J D ET AL: "Power generation using a mesoscale fuel cell integrated with a microscale fuel processor" JOURNAL OF POWER SOURCES, ELSEVIER, AMSTERDAM, NL, Bd. 130, Nr. 1-2, 3. Mai 2004 (2004-05-03), Seiten 111-118, XP004500856 ISSN: 0378-7753

## Beschreibung

Die Erfindung betrifft ein Brennstoffzellensystem, das einen Hochtemperatur-Brennstoffzellenstapel mit Stromableitern und einen Reformierer und/oder einen Nachbrenner aufweist, wobei die Stromableiter an ihrem anderen Ende Niedertemperatur-Anschlusselemente kontaktieren.

Brennstoffzellen dienen der direkten elektro-chemischen Umwandlung eines Brenngases und eines Oxidationsmittels in die entsprechenden Reaktionsprodukte unter Abgabe von elektrischer Energie. Brenngas und Oxidationsmittel werden im Folgenden zusammenfassend Betriebsmittel genannt. Als Brennstoffzellensystem wird im allgemeinen eine Anordnung gezeichnet, die neben einer oder mehreren, zu einem sogenannten Brennstoffzellenstapel zusammengeschalteten Brennstoffzellen weitere Komponenten, wie zum Beispiel Reformierer, Nachbrenner oder Elektronikeinheiten zur Steuerung des Systems oder zur Umwandlung der erzeugten Spannung aufweist. Ein Reformierer dient dabei der Erzeugung von wasserstoffhaltigem Brenngas aus meist flüssigem, gut handhabbarem und leicht verfügbarem Brennstoff, wie zum Beispiel Benzin oder Dieselkraftstoff, das der Anode der Brennstoffzelle zugeführt wird. Brennstoffzellen setzen das Brenngas meist nicht vollständig um. Die Reaktionsprodukte werden dann üblicherweise einem Nachbrenner zugeführt, wo sie verbrannt werden bevor sie als Abgas in die Umgebung entlassen werden.

Es gibt verschiedene Brennstoffzellentypen, die sich im benutzten Elektrolyt zur lonenleitung unterscheiden. Vom benutzten Elektrolytmaterial hängt die Temperatur ab, bei der die Brennstoffzelle betrieben werden kann. Die höchsten Betriebstemperaturen weisen dabei die an Feststoffoxid-Brennstoffzelle (SOFC - Solid Oxide Fuel Cell) mit 800 bis 1000° Celsius und die Karbonatschmelze-Brennstoffzelle (MCFC - Molten Carbonate Fuel Cell) mit etwa 650° Celsius auf. Diese beiden Typen von Brennstoffzellen werden im folgenden zusammenfassend als Hochtemperatur-Brennstoffzellen (HTFC - High Temperature Fuel Cell) bezeichnet.

Zum Abführen des von den Brennstoffzellen produzierten Stroms führen vom Brennstoffzellenstapel Stromableiter zu Anschluss-elementen, an denen oft eine elektronische Wandlereinheit (DC DC-Wandler) zur Umsetzung der Spannung und gegebenenfalls ihrer Stabilisierung angeschlossen ist. Die Temperatur der Anschlusselemente darf dabei einen vorgegebenen Maximalwert, der etwa bei 100° Celsius liegt, nicht überschreiten, um die angeschlossene Wandlereinheit nicht zu überhitzen. Somit weist das eine Ende der Stromableiter die hohe Temperatur der HTFC auf, während das andere Ende auf der niedrigeren Temperatur des Anschlusselementes gehalten wird.

Mit der für die Stromleitung der Ableiter gewünschten hohen elektrischen Leitfähigkeit geht nach dem Wiedemann-Franzschen Gesetz eine entsprechend hohe thermische Leitfähigkeit einher. Der große Temperaturunterschied zwischen den Enden der Stromableiter führt damit zu einer Leitung von Wärme von dem Hochtemperatur-Brennstoffzellenstapel zu den Niedertemperatur-Anschlusselementen. An den Anschlusselementen wird diese Wärme üblicherweise durch geeignete Kühlmaßnahmen abgeführt, um eine Überhitzung der Anschlusselemente über die maximal zulässige Temperatur zu verhindern. Am Brennstoffzellenstapel hat die entnommene Wärme eine lokale Abkühlung ("Cold Spot") in der Umgebung der Anschlusspunkte zur Folge. Solche Cold Spots sind nachteilig für einen effizienten Betrieb der Brennstoffzellen. Zum einen ist die Brennmittelverwertung am Cold Spot selber ineffektiver, zum anderen führt jede Temperaturinhomogenität zu einer Variation im Weitertransport der Brennmittel innerhalb der Brennstoffzellen, was ebenfalls den Wirkungsgrad des Brennstoffzellenstapels mindert.

Es ist daher Aufgabe der Erfindung, ein Brennstoffzellen-system, basierend auf einem Hochtemperatur-Brennstoffzellenstapel, anzugeben, bei dem über die Stromableiter keine Wärme aus dem Hochtemperatur-Brennstoffzellenstapel abgeführt wird und so eine Abkühlung des Brennstoffzellenstapels in der Umgebung der Anschlussstellen der Stromableiter verhindert wird.

Diese Aufgabe wird erfindungsgemäß durch ein Brennstoffzellensystem gelöst, bei dem die Stromableiter zwischen dem Hochtemperatur-Brennstoffzellenstapel und den Niedertemperatur-Anschlusselementen in wenigstens einer Kontaktstelle im thermischen Kontakt mit dem Reformierer und/oder dem Nachbrenner sind.

Reformierer und Nachbrenner arbeiten üblicherweise bei Temperaturen, die über den Betriebstemperaturen einer Hochtemperatur-Brennstoffzelle liegen. Dadurch, dass die Stromableiter in thermischen Kontakt mit einem Element gebracht werden, das heißer ist als der Brennstoffzellenstapel, wird eine Wärmeabfuhr aus dem Brennstoffzellenstapel vermieden.

Durch eine geeignete Dimensionierung der Ableiterlänge, des Durchmessers, der Wahl des Materials sowie der Güte des thermischen Kontaktes kann optimalerweise erreicht werden, dass über die Ableiter beim Betrieb weder Wärme aus noch in den Brennstoffzellenstapel hineintransportiert wird, und gleichzeitig der Wärmefluss zu den Anschlusselementen nur unwesentlich ansteigt.

Ein weiterer Vorteil der Erfindung ist während der Aufheizphase des Hochtemperatur-Brennstoffzellenstapels gegeben. Das Aufheizen des Brennstoffzellenstapels auf Betriebstemperatur erfolgt üblicherweise dadurch, dass zunächst der Nachbrenner, und falls im System vorgesehen auch der Reformierer, gestartet werden, wobei das Brenngas unter Umgehung des Brennstoffzellenstapels direkt in den Nachbrenner geführt wird. Die von Reformierer und/oder Nachbrenner erzeugte Wärme wird dann mittels eines Wärmetauschers über einen Luftstrom dem Brennstoffzellenstapel zugeführt und heizt diesen auf Betriebstemperatur auf. Erfindungsgemäß erfolgt durch die Stromableiter ebenfalls ein Wärmefluss vom Reformierer und/oder Nachbrenner zum Brennstoffzellenstapel, der das Aufheizen unterstützt.

Vorteilhafte Weiterbildungen und Ausgestaltungen der Erfindung sind in den Unteransprüchen angegeben.

Nachfolgend wird die Erfindung an einem Ausführungsbeispiel anhand einer Figur näher erläutert.

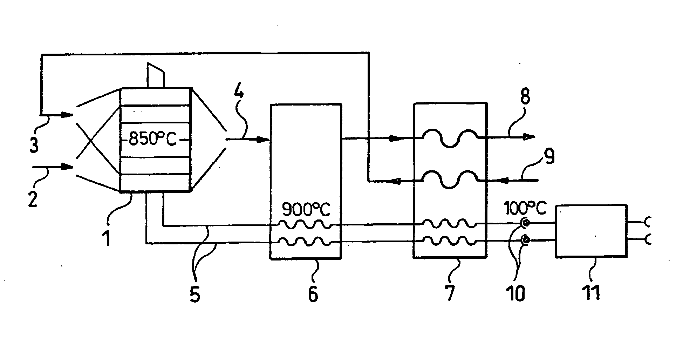

Es zeigt:
die Figur ein Blockschaltbild eines Ausführungsbeispiel des vorgeschlagenen Brennstoffzellensystems.

Das in der Figur dargestellte Brennstoffzellensystem weist einen Hochtemperatur-Brennstoffzellenstapel (HTFC-Stapel) 1 auf, mit einer Brenngaszufuhr 2, einer Kathodenluftzufuhr 3, einem Abgaskanal 4 und Stromableitern 5. Der Abgaskanal 4 ist über einen Nachbrenner 6 und einen Wärmetauscher 7 mit einem Abgasauspuff 8 verbunden. Die Kathodenluftzufuhr 3 des HTFC-Stapels 1 ist über den Wärmetauscher 7 mit einer Luftzufuhr 9 verbunden. Die Stromableiter 5 des HTFC-Stapels 1 werden über den Nachbrenner 6 und den Wärmetauscher 7 zu Niedertemperatur-Anschlusselementen 10 geführt, wo sie eine Wandlereinheit 11 zur Umwandlung der Spannung des von dem HTFC-Stapels 1 abgegebenen Stroms kontaktieren.

In der schematischen Zeichnung ist der HTFC-Stapel 1 als seriell verschalteter Brennstoffzellenstapel aufgebaut, wobei Trennplatten jeweils Anode der einen mit der Kathode der nächsten Brennstoffzelle verbinden und gleichzeitig der Brennmittelverteilung dienen. An den beiden Enden des HTFC-Stapels 1 sind Endplatten angeordnet, die analog zu den Trennplatten aufgebaut sind und an die die Stromableiter 5 angeschlossen sind. Diese Anordnung ist lediglich beispielhaft. Die Erfindung ist unabhängig von der genauen Ausführung des HTFC-Stapels 1 und ist auf jede beliebige Anordnung oder Zusammenschaltung von einer oder mehrerern Hochtemperatur-Brennstoffzellen übertragbar. Die im folgenden angegebenen Betriebstemperaturen verschiedener Komponenten des Brennstoffzellensystems sind typisch für ein Festoxid-Brennstoffzellensystem (SOFC) und sind ebenfalls als beispielhaft anzusehen.

Der HTFC-Stapel 1 arbeitet bei einer Betriebstemperatur von 850° Celsius. Diese hohe Temperatur ist notwendig, um eine ausreichende Ionen-Leitung des eingesetzten Elektrolyten zu erzielen. Die Betriebstemperatur wird im wesentlichen durch die vom HTFC-Stapel 1 im Betrieb selbst erzeugte Abwärme aufrechterhalten. Zusätzlich wird die über die Kathodenluftzufuhr 3 eingebrachte Luft, die als Oxidationsmittel eingesetzt wird, vorgewärmt. Zu diesem Zweck wird Wärme aus den Abgasen des HTFC-Stapels 1 im Wärmetauscher 7 auf die zugeführte Luft übertragen. Analog dazu könnte das über die Brenngaszufuhr 2 zugeführte Brenngas vorgewärmt werden. Häufig wird das Brenngas jedoch aus einem flüssigen und leicht zu handhabbaren und zu transportierenden Brennstoff erzeugt. Der zu diesem Zweck eingesetzte und hier nicht dargestellte Reformierer nutzt eine Reformierungsreaktion, wie beispielsweise die sogenannte partielle Oxidation, und arbeitet bei Temperaturen oberhalb von 1200° Celsius. In diesem Fall ist das Brenngas bereits aufgrund der Reformierungsreaktion vorgewärmt.

Das im Abgaskanal 4 gesammelte Abgas des HTFC-Stapels 1 könnte direkt dem Wärmetauscher 7 und nachfolgend dem Abgasauspuff 8 zugeführt werden. Häufig enthält es jedoch noch verwertbare restliche Brenngase, die nachverbrannt werden müssen, bevor sie als Abgas in die Umgebung abgelassen werden können. Dazu dient der Nachbrenner 6, der typischerweise bei 900° Celsius, also bei Temperaturen leicht oberhalb der Betriebstemperatur des HTFC-Stapels 1, arbeitet.

Die an den HTFC-Stapel 1 angeschlossenen Stromableiter 5 enden in den Niedertemperatur-Anschlusselementen 10. Diese Niedertemperatur-Anschlusselemente 10 könnten direkt extern zugänglich sein, um elektrische Verbraucher anschließen zu können. Häufig sind jedoch in dem Brennstoffzellensystem Komponenten vorhanden, mit denen zum Beispiel die Spannung des abgegebenen Stroms verändert oder stabilisiert werden kann oder die der Systemsteuerung dienen. In diesem Ausführungsbeispiel ist die Wandlereinheit 11 als eine solche Komponente zur Transformation der Spannung vorgesehen. In jedem Fall darf die Temperatur der Niedertemperatur-Anschlusselemente 10 zum Schutz der angeschlossenen Komponenten eine Maximaltemperatur von etwa 100° Celsius nicht überschreiten. Bei einer direkten Verbindung des HTFC-Stapels 1 mit den Niedertemperatur-Anschlusselementen 10 über die Stromableiter 5 nach dem Stand der Technik führt der große Temperaturunterschied von mehr als 750° Celsius dazu, dass mit der gewünschten guten elektrischen Leitfähigkeit der Stromableiter 5 eine unerwünschte Leitung von Wärme aus dem HTFC-Stapel 1 zu den Niedertemperatur-Anschlusselementen 10 einhergeht. Da elektrische und thermische Leitfähigkeit untrennbar miteinander verbunden sind, kann dieser unerwünschte Wärmestrom nicht ausgeschaltet werden. Er lässt sich lediglich durch die Materialauswahl für die Stromableiter 5 leicht beeinflussen. Beispielsweise sind Edelstähle ein geeignetes Material, da sie im benutzten Temperaturbereich stabil gegen Oxidation sind und gleichzeitig ein günstiges Verhältnis von elektrischer zu thermischer Leitfähigkeit aufweisen.

Erfindungsgemäß stehen die Stromableiter 5 in thermischem Kontakt mit dem Nachbrenner 6. Im gezeigten Beispiel ist der thermische Kontakt ausgeführt, in dem die Stromableiter 5 durch einen Gasstrom innerhalb des Nachbrenners 6 geführt werden. Zusätzlich kann zur Erzielung eines guten thermischen Kontaktes die Oberfläche der Stromableiter 5 im Nachbrenner 6 erhöht werden, indem diese spiralförmig ausgeführt sind oder Wärmeübergangselemente aufweisen. Durch diesen thermischen Kontakt werden die Stromableiter 5 auf ihrem Weg zu den Niedertemperatur-Anschlusselementen 10 auf eine Temperatur gebracht, die größer oder gleich der Temperatur des HTFC-Stapels 1 ist. Dadurch wird sichergestellt, dass keine Wärme aus dem HTFC-Stapel 1 in Richtung der Niedertemperatur-Anschlusselemente 10 abgeführt wird. Eine Abkühlung der Endplatten des HTFC-Stapels kann somit verhindert werden. Optimalerweise ist der thermische Kontakt der Stromableiter 5 am Nachbrenner 6 so gewählt, dass zusammen mit den Wärmeverlusten durch Wärmeabstrahlung oder Wärmeableitung der Stromableiter 5 zu ihrer Umgebung der Temperaturgradient in den Stromableitern 5 an der Anschlussstelle zum HTFC-Stapel 1 gerade Null beträgt. Dann wird während des Betriebs weder Wärme in den HTFC-Stapel 1 hinein, noch herausgeführt. Durch die gegenüber dem HTFC-Stapel 1 leicht erhöhte Temperatur des Nachbrenners 6 und die u.U. kürzere Länge der Stromableiter 5 zwischen Nachbrenner 6 und Niedertemperatur-Anschlusselementen 10 verglichen mit der Ableiterlänge zwischen Stapel 1 und Niedertemperatur-Anschlusselementen 10 steigt durch den erfindungsgemäßen thermischen Kontakt zwischen Stromableitern 5 und Nachbrenner 6 der Temperaturgradient im Abschnitt zwischen Nachbrenner 6 und Niedertemperatur-Anschlusselementen 10. Dieses führt zu einem erhöhten Wärmefluss in die Niedertemperatur-Anschlusselemente 10 hinein. Der erhöhte Wärmefluss kann jedoch minimiert werden, indem durch geeignete geometrische Anordnung der Komponenten die Länge der Stromableiter 5 zwischen HTFC-Stapel 1 und Nachbrenner 6 kurz verglichen zur Länge der Stromableiter 5 zwischen Nachbrenner 6 und Niedertemperatur-Anschlusselementen 10 gewählt wird. Darüber hinaus ist erfindungsgemäß ein thermischer Kontakt zwischen den Stromableitern 5 und dem Wärmetauscher 7 vorgesehen. Der thermische Kontakt zum Wärmetauscher 7 besteht vorzugsweise in unmittelbarer Nähe zur Luftzufuhr 9. Dadurch werden die Stromableiter 5 auf eine Temperatur heruntergekühlt, die günstigstenfalls unterhalb der zulässigen Maximaltemperatur der Niedertemperatur-Anschlusselemente 10 liegt. Eine darüberhinausgehende Kühlung der Niedertemperatur-Anschlusselemente 10, z.B. durch einen zusätzlichen Lüfter, kann so unter Umständen ganz entfallen oder kleiner dimensioniert werden.

Die gezeigte Anordnung ist aus verschiedenen Gründen geeignet, die Effektivität des Brennstoffzellensystems zu erhöhen.

Erstens wird eine Abkühlung des HTFC-Stapels 1 an seinen Enden in der Umgebung der Anschlusspunkte der Stromableiter 5 verhindert. Dadurch wird eine effektive Umsetzung des Brenngases und ein gleichmäßiger Transport der Brennmittel gesichert.

Zweitens verläuft der Nettowärmetransport innerhalb der Stromableiter 5 vom Nachbrenner 6 zum HTFC-Stapel 1 sowie vom Nachbrenner 6 über den Wärmetauscher wieder zurück zum HTFC-Stapel 1. Die über die Stromableiter 5 geführte Wärme wird somit in jedem Fall dem HTFC-Stapel 1 und damit dem System selber wieder zugeführt, was zu einer höheren Systemeffizienz führt.

Drittens ist die gezeigte Anordnung vorteilhaft in der Aufwärmphase des Systems. Das Wärmefluss beim Aufwärmen des HTFC-Stapels 1 verläuft vom Nachbrenner 6 über den Wärmetauscher 7 und die Kathodenluft zum HTFC-Stapel 1. Der Wärmefluss in den Stromableitern 5 unterstützt somit in dieser Phase das Aufwärmen des HTFC-Stapels 1.

Falls im Brennstoffzellensystem ein Reformierer vorgesehen ist, so kann der Reformierer alternativ zum Nachbrenner 6 oder parallel zum Nachbrenner 6 in thermischen Kontakt zu den Stromableitern 5 stehen. Da der Reformierer üblicherweise ebenfalls bei Temperaturen, die über den Betriebstemperaturen des HTFC-Stapels 1 liegen, betrieben wird, führt der thermische Kontakt der Stromableiter 5 zu dem Reformierer zu den gleichen Vorteilen wie der thermische Kontakt der Stromableiter 5 zum Nachbrenner 6.

In allen gezeigten Fällen kann ein thermischer Kontakt der Stromableiter 5 erreicht werden, in dem die Ableiter durch den heißen Gas bzw. kalten Luftstrom geführt werden. Ebenfalls ist es möglich, einen thermischen Kontakt zu erzielen, indem die Stromableiter 5 thermisch kontaktierend, aber elektrisch isoliert, am Gehäuse der entsprechenden Komponente befestigt sind. Ein thermischer Kontakt bei gleichzeitiger elektrischer Isolation kann mit Hilfe von Materialien wie Keramiken oder Glimmer erreicht werden.

### Bezugszeichenliste

- 1: Hochtemperatur-Brennstoffzellenstapel (HTFC-Stapel)
- 2: Brenngaszuführung
- 3: Kathodenluftzuführung
- 4: Abgaskanal
- 5: Stromableiter
- 6: Nachbrenner
- 7: Wärmetauscher
- 8: Abgasauspuff
- 9: Luftzufuhr
- 10: Niedertemperatur-Anschlusselemente
- 11: Wandlereinheit

## Patentansprüche

1. Brennstoffzellensystem, das einen Hochtemperatur-Brennstoffzellenstapel (1) mit Stromableitern (5) und einen Reformierer und/oder einen Nachbrenner (6) aufweist, wobei die Stromableiter (5) an ihrem anderen Ende Niedertemperatur-Anschlusselemente (10) kontaktieren,
**dadurch gekennzeichnet, dass**
die Stromableiter (5) zwischen dem Hochtemperatur-Brennstoffzellenstapel (1) und den Niedertemperatur-Anschlusselementen (10) in wenigstens einer Kontaktstelle in thermischen Kontakt mit dem Reformierer und/oder dem Nachbrenner (6) sind.

2. Brennstoffzellensystem nach Anspruch 1, **dadurch gekennzeichnet, dass**
im Reformierer und/oder dem Nachbrenner (6) ein innerer, heißer Gasstrom vorhanden ist, und die Stromableiter (5) durch den inneren heißen Gasstrom verlaufen, um thermischen Kontakt zu erzielen.

3. Brennstoffzellensystem nach Anspruch 1, **dadurch gekennzeichnet, dass**
die Stromableiter (5) mit dem Gehäuse des Reformierers und/oder des Nachbrenners (6) verbunden sind, um thermischen Kontakt zu erzielen.

4. Brennstoffzellensystem nach einem der Ansprüche 1 bis 3, **dadurch gekennzeichnet, dass**
das Brennstoffzellensystem einen Wärmetauscher (7) zur Vorwärmung der dem Hochtemperatur-Brennstoffzellenstapel (1) zugeführten Luft aufweist, und die Stromableiter (5) zwischen der Kontaktstelle und den Niedertemperatur-Anschlusselementen (10) in wenigstens einer weiteren Kontaktstelle in thermischen Kontakt mit dem Wärmetauscher (7) sind.

5. Brennstoffzellensystem nach Anspruch 4, **dadurch gekennzeichnet, dass**
die Stromableiter (5) durch den Luftstrom im Wärmetauscher (7) verlaufen, um thermischen Kontakt zu erzielen.

6. Brennstoffzellensystem nach Anspruch 4, **dadurch gekennzeichnet, dass**
die Stromableiter (5) mit dem Gehäuse des Wärmetauschers (7) verbunden sind, um thermischen Kontakt zu erzielen.

7. Brennstoffzellensystem nach einem der Ansprüche 1 bis 6, **dadurch gekennzeichnet, dass**
das Brennstoffzellensystem an den Niedertemperatur-Anschlusselementen (10) zur Stromabgabe kontaktierbar ist.

8. Brennstoffzellensystem nach einem der Ansprüche 1 bis 6, **dadurch gekennzeichnet, dass**
das Brennstoffzellensystem eine Einheit (11) zur Umwandlung der Spannung des von dem Hochtemperatur-Brennstoffzellenstapel (1) abgegebenen Stroms aufweist, wobei diese Einheit (11) intern im Brennstoffzellensystem mit den Niedertemperatur-Anschlusselementen (10) verbunden ist.

## Claims

1. Fuel cell system, which comprises a high-temperature fuel cell stack (1) having current conductors (5) and a reformer and/or an afterburner (6), the current conductors (5) making contact with low-temperature connecting elements (10) at their other end,
**characterized in that**
the current conductors (5) are in thermal contact with the reformer and/or the afterburner (6) at at least one contact point between the high-temperature fuel cell stack (1) and the low-temperature connecting elements (10).

2. Fuel cell system according to Claim 1, **characterized in that** there is an inner, hot gas stream in the reformer and/or the afterburner (6), and the current conductors (5) run through the inner hot gas stream in order to achieve thermal contact.

3. Fuel cell system according to Claim 1, **characterized in that** the current conductors (5) are connected to the housing of the reformer and/or the afterburner (6) in order to achieve thermal contact.

4. Fuel cell system according to one of Claims 1 to 3, **characterized in that** the fuel cell system has a heat exchanger (7) for preheating the air supplied to the high-temperature fuel cell stack (1), and the current conductors (5) are in thermal contact with the heat exchanger (7) at at least one further contact point between the contact point and the low-temperature connecting elements (10).

5. Fuel cell system according to Claim 4, **characterized in that** the current conductors (5) run through the air stream in the heat exchanger (7) in order to achieve thermal contact.

6. Fuel cell system according to Claim 4, **characterized in that** the current conductors (5) are connected to the housing of the heat exchanger (7) in order to achieve thermal contact.

7. Fuel cell system according to one of Claims 1 to 6, **characterized in that** it is possible to make contact between the fuel cell system and the low-temperature connecting elements (10) in order to output current.

8. Fuel cell system according to one of Claims 1 to 6, **characterized in that** the fuel cell system has a unit (11) for converting the voltage of the current output by the high-temperature fuel cell stack (1), this unit (11) being connected to the low-temperature connecting elements (10) internally in the fuel cell system.

## Revendications

1. Système de cellules à combustible qui présente une pile de cellules à combustible à haute température (1) avec des collecteurs de courant (5) et un reformeur et/ou une chambre de post-combustion (6), les collecteurs de courant (5) contactant à leur autre extrémité des éléments de connexion à basse température (10),
**caractérisé en ce que**
les collecteurs de courant (5) sont, entre la pile de cellules à combustible à haute température (1) et les éléments de connexion à basse température (10), en contact thermique avec le reformeur et/ou la chambre de post-combustion (6) en au moins un point de contact.

2. Système de cellules à combustible selon la revendication 1, **caractérisé en ce qu'**un courant de gaz chaud interne est présent dans le reformeur et/ou la chambre de post-combustion (6), et les collecteurs de courant (5) passent à travers le courant de gaz chaud interne pour obtenir le contact thermique.

3. Système de cellules à combustible selon la revendication 1, **caractérisé en ce que** les collecteurs de courant (5) sont reliés au boîtier du reformeur et/ou de la chambre de post-combustion (6) pour obtenir le contact thermique.

4. Système de cellules à combustible selon l'une des revendications 1 à 3, **caractérisé en ce que** le système de cellules à combustible présente un échangeur de chaleur (7) pour préchauffer l'air amené à la pile de cellules à combustible à haute température (1), et les collecteurs de courant (5) sont, entre le point de contact et les éléments de connexion à basse température (10), en contact thermique avec l'échangeur de chaleur (7) en au moins un autre point de contact.

5. Système de cellules à combustible selon la revendication 4, **caractérisé en ce que** les collecteurs de courant (5) passent à travers le courant d'air dans l'échangeur de chaleur (7) pour obtenir le contact thermique.

6. Système de cellules à combustible selon la revendication 4, **caractérisé en ce que** les collecteurs de courant (5) sont reliés au boîtier de l'échangeur de chaleur (7) pour obtenir le contact thermique.

7. Système de cellules à combustible selon l'une des revendications 1 à 6, **caractérisé en ce que** le système de cellules à combustible peut être mis en contact avec les éléments de connexion à basse température (10) pour l'émission de courant.

8. Système de cellules à combustible selon l'une des revendications 1 à 6, **caractérisé en ce que** le système de cellules à combustible présente une unité (11) pour convertir la tension du courant émis par la pile de cellules à combustible à haute température (1), cette unité (11) étant reliée aux éléments de connexion à basse température (10) à l'intérieur du système de cellules à combustible.
